# EUROPEAN PATENT APPLICATION

(11) **EP 4 215 828 A1**
(43) Date of publication of application: **26.07.2023**
(21) Application number: 21881702.1
(22) Date of filing: 27.08.2021
(51) Int. Cl.: F24F 5/00, F24F 11/46, F24F 11/61, F24F 130/10

(54) **ICE STORAGE COOLING/ROOM-HEATING/HEATING AIR CONDITIONING SYSTEM CONTROLLED BY WEATHER FORECAST, TIME, TEMPERATURE, AND LIQUID LEVEL**

(30) Priority: 19.10.2020 CN 202011122593
(71) Applicant: Qing, Yunfeng, Shenzhen, Guangdong 518133 (CN)
(72) Inventor: Qing, Yunfeng, Shenzhen, Guangdong 518133 (CN)
(74) Representative: Cleanthous, Marinos
(86) International application number: PCT/CN2021/114948
(87) International publication number: WO 2022/083283

(57) **Abstract**

A cloud-controlled intelligent energy-saving cooling/room-heating/heating system which captures data of a highest temperature in a weather forecast at a mounting site of equipment by using a cloud-controlled intelligent system, and is based on time control and digital liquid level control. The system enables devices to operate under different conditions at different ambient temperatures and at different time, and always operate intelligently at a maximum energy efficiency ratio and a minimum power grid occupancy.

## Description

### TECHNICAL FIELD

The present disclosure integrates intelligent cloud control and an air source heat pump system. Accurately speaking, the present disclosure is an air source heat pump system which integrates intelligently capturing data by an Internet of things, controlling a time program, different station temperatures and ambient temperatures, and accurately calculating an ice storage capacity on the basis of liquid level detection, and integrates heat recycling under ice storage cooling and refrigeration conditions of releasing cold energy in change of a cold phase and a water phase. The present disclosure belongs to the field of intelligently controlled heating ventilation air conditioners and heat pumps.

### BACKGROUND

With the increase of people's living standards, requirements for living conditions are higher and higher: for an air conditioner, cooling is required at high temperatures, and heating is required at low temperatures. Domestic hot water at any time has become indispensable rigid demands in modern work and life.

It is statistical that, according to current requirements for domestic heating, domestic hot water (using gas, fuel, or electricity), and summer cooling (using electricity), the installed capacity of household and commercial heating and cooling equipment accounts for over 20% of the total power grid capacity and over 75% of the energy consumption of residential buildings. In 2019, the proportion of the global air conditioning electricity consumption to the total electricity consumption was around 12%, while China's overall air conditioning electricity consumption (both civil and commercial) accounted for about 34% of the global total electricity consumption (the above is the annual public data).

More and more sets of heating and cooling equipment are installed, which have higher requirements for an initial installed capacity of a power grid. Power supply lines are also thicker. The requirement for an overall power generation capacity of the whole society is also higher.

A current mainstream technology in China is still using coal-fired gas heating+ gas (electricity) heating+ air conditioner cooling, but the technology in Europe and America is gas+ fuel heating and electricity+ air conditioner cooling. In all methods, two or even three sets of heating and cooling systems are used, with dual (multiple) investments. Traditional cooling and heating methods all have high energy consumption and low comprehensive energy efficiency ratio.

As is well known, coal-fired, fuel, and gas heating is the chief culprit in the formation of haze and modern environmental pollution. At the same time, large-scale increase in the installed capacity of the power grid requires construction of a large number of power plants, which will cause huge investment. Nowadays, power plants mainly rely on coal-fired and gas power generation. It is apparent that non-renewable resources are wasted and the more serious environmental pollution is caused.

An air conditioning load is the main culprit of repeatedly breaking through records of peak loads of the power grid in summer. In winter, coal-fired and gas heating is used, so that the refrigeration equipment is idle, which directly leads to an imbalance of an electrical load in summer and winter, and wastes a large number of installed capacity resources and the investment of a power plant.

The existing cooling/room-heating/heating combined systems on the market now also use air source heating (heat storage), but due to the lack of a full use measure for cooling and heating energy, as well as the lack of a cold energy storage system, the installed capacity of the equipment will not be significantly reduced. In fact, the actual function of the equipment is still equivalent to the functions of separate systems. When there is a demand for cooling, a cooling system needs to be turned on in real time. At the same time, heat energy generated by cooling has not been fully recycled. Meanwhile, this configuration cannot achieve the objectives of reducing the installed capacity of the equipment, cutting peaks, supplementing valleys, and fully using air energy of a low-temperature of the environment at night. This is also a fundamental reason why the cooling/room-heating/heating combined system on the market has not been accepted.

The power supply standards for the existing cold/room-heating/heating series products on the market are as follows: in order to meet the power supply standards of different districts, all or the vast majority of control board components and control parts need to be replaced. Products sold in districts with different power supply standards have strict power input requirements (such as 220 V/50 HZ in China and 120 V/60 HZ in the United States). This will increase production and procurement costs, thereby increasing user costs and wasting resources.

Once the control and parameters of the existing air conditioning air source heat pump system are formed, they cannot be remotely modified to adapt to an ambient temperature of an mounting site of the equipment. Only using equipment produced in different districts and of different types to adapt to the ambient temperature of the mounting site of the equipment, (for example, different types of products are sold in the south and north in China), so that enterprise production and management costs are wasted, and the user burden is indirectly increased.

An optimal solution to solve these problems is a cloud-controlled intelligent energy-saving cooling/room-heating combined design scheme: an intelligent cloud-controlled all-in-one machine with air source heat pump room-heating/heating+ice storage cooling/conventional cooling assistance. The present disclosure basically solves all the above problems systematically and is an optimal scheme with domestic hot water, air conditioning, underfloor heating, and indoor air conditioning low-temperature heating.

### SUMMARY

Weather forecast, time, temperature, and digital liquid level intelligent cloud control:
The intelligent cloud-controlled system of the present disclosure can provide different refined remote background parameter settings for different mounting sites of equipment, and use the same type of equipment to adapt to different district requirements.

The system of the present disclosure adopts Over-the-Air (OTA) remote upgrade and supports remote modification of key parameters of the equipment in the background. Operating conditions of all online equipment worldwide can be monitored and managed through the background of the system.

A main unit and an indoor unit of the present disclosure are designed using a wide voltage range of 80-240 V. Motors of a heat dissipation fan and an indoor axial flow fan both use DC variable speed motors, and other executive components use a low-voltage DC safe voltage. For different power standards worldwide, only a compressor with a corresponding power requirement needs to be configured, without changing other components and parts, to achieve more standardized design, unified production, and purchase, and to reduce costs. The indoor unit uses a globally unified control board and parts, and all other parts and the control board of the main unit are consistent except for the compressor.

The cloud-controlled intelligent system of the present disclosure automatically captures and calls data of the highest weather forecast temperature of the mounting site of the equipment within the next 24 hours during a set time period of the system. According to the programming design of the system, the system is combined with a high-precision digital liquid level detector are used to automatically adjust the ice-making capacity at night, which ensures that there is the most energy-efficient ice storage capacity (enough) in an environment with different maximum temperatures in the next day. To meet the need of cold energy during the day, the demand of a user can be met, without turning on the main unit, by using the characteristic of releasing a large amount of cold energy during ice and water phase change, thereby cutting peaks, supplementing valleys, reducing a capacity load of a power grid, saving energy at the source, and achieving the optimal energy efficiency ratio.

The system of the present disclosure is designed with digital liquid level detection, and an ice water separation net is mounted in the middle of a freeze water tank. Due to the characteristic that water in the freeze water tank changes from liquid to a solid ice block and is stored in a solid state on the ice water separation net, which will lower a water level, a liquid level is intelligently detected, and an ice storage capacity is calculated and adjusted. Meanwhile, the cloud-controlled intelligent system can ensure that in the event of an excessively high temperature or other abnormal situations in the day, when excessive cold energy is needed, ice energy storage is dominant, and a main unit cooling program is promptly activated as an auxiliary cooling system to meet the needs of users.

The energy storage (cold and heat storage) design of the present disclosure can meet demands for air conditioning cooling, low-temperature storage, and heating such as 24-hour domestic hot water and winter underfloor heating by using low power equipment (only 1/2 to 1/3 of a required electric capacity for conventional mounting with the same usage area). In terms of equipment hardware capacity, the load on the power grid is fundamentally reduced, and requirements for the capacity of the power grid is lowered. At the same time, costs of users for laying power lines is reduced.

The system of the present disclosure adopts a fixed-frequency compressor, which can always operate at a full load with the best energy efficiency ratio and will not be frequently turned on and turned off.

By the system of the present disclosure, users can use heat energy for free as long as there is a cooling demand. In terms of home life needs, the demand for heat energy in daily life is "zero" energy consumption.

The system of the present disclosure adopts a double-pipe heat exchanger (a heat exchange tank) as a series primary condenser, although it increases a little hardware cost, the following functions are achieved:
1) The double-pipe heat exchanger (heat exchange tank) plays a role of a primary condenser under any working condition, and the heat energy recovery has the best energy efficiency ratio.
2) The system has been designed with a series secondary auxiliary condenser; a choke tube is additionally designed between the primary condenser (the double-pipe heat exchanger, or the heat exchange tank) and the secondary auxiliary condenser. This greatly reduces a condensation temperature and condensation pressure by increasing the volume of the condenser, and a heating temperature of the double-pipe heat exchanger (heat exchange tank) is also increased due to the design of the choke tube. The subcooling degree of a coolant also greatly decreases by the cooling of the secondary condenser, and the efficiency of cooling and heating is greatly improved.
3) In a heating program, by system control, a cooling plate evaporator (a pillow-shaped heat exchanger) that is idle during heating should have been used as a series secondary condenser during heating, so that the heat exchange is more complete, the subcooling degree of the coolant also greatly decreases, and the energy efficiency ratio effect is more obvious. At the same time, through the heat exchange of the secondary condenser (the pillow-shaped heat exchanger), low-temperature hot water is produced in the original freeze water tank and is used for auxiliary heating to provide energy for heating defrosting, which maximizes the energy efficiency ratio.

The present disclosure is a complete integrated design of components including a freeze water tank, a hot water tank, a main unit, a condenser, an evaporator, and a control board. There is no external copper compressor coolant pipe, but a compressor coolant is also fully controlled within the entire machine. The integrated design saves raw materials of production and makes mounting simple. The problem of environmental pollution caused by coolant leakage due to mounting is solved, and the increased risk of malfunction caused by slow leakage due to poor mounting and the possible worry of customers to pay for coolant adding in the future are also avoided.

Supporting equipment of the present disclosure is fully connected to the Internet of Things: A WIFI network that is already indispensable to modern people in the environment is used to achieve complete radiofication and teleportation. The main unit, the indoor unit, an underfloor heating controller, and other equipment are fully controlled via communication through a local area network, and users can control and view operation statuses of the equipment through an APP (Application) wherever there is Internet.

The equipment of the present disclosure is easy to mount and environmentally friendly, and any physical object that connects a power cable to a signal control cable does not need to be mounted between an indoor control unit and an outdoor main unit. This is the most environmentally friendly, the most economical and the most convenient choice for the budget of the mounting investment of the equipment of a user, the raw materials for mounting, and possible subsequent line faults. During mounting of the equipment, only a power supply needs to be provided for each independent component.

In the present disclosure, remote background system updates, system check, detection, and authorization setting are provided for any faults caused by non-mounting problems.

The present disclosure also provides low-temperature line protection. If a user does not choose to use the freeze water tank (low-temperature hot water in winter) for auxiliary heating when the ambient temperature is below 2°C, an air conditioning circulating water pump has been already configured on each floor will circulate for 3 minutes every 4 hours, to ensure that an air conditioning water line is not frozen or damaged.

External cold and heat transmission media of the equipment of the present disclosure are all ordinary clean (purified) domestic water, which is completely free from environmental pollution.

The present disclosure is a high-capacity cold energy and hot energy storage device with single, fixed-frequency, and low-capacity power. The cost investment of the equipment is low. Under the same usage area, an occupied power grid capacity is also very small. The equipment is fully functional and easy to maintain. One machine can meet all requirements for cold and hot energy of families at a third floor or below.

According to the design of the present disclosure, the secondary condenser (for cooling) and the evaporator (for heating) (different names for the same equipment hardware) are placed at the highest position of the equipment, and heat dissipation air is vertically blown upwards, which avoids the problems of slow decrease of the heat dissipation efficiency and shortening of the service life caused by easy pollution to the evaporator which is mounted at a low position. Meanwhile, a wind direction of a heat dissipation fan is upward, which makes full use of natural wind in any direction and achieving higher heat dissipation efficiency.

According to the system settings of the present disclosure, it ensures that the temperature of the hot water can meet needs of users at any time when the machine is turned off without human intervention.

The product of the present disclosure is overall foamed by 40 mm for protection at both low and high temperatures, with a good insulation effect.

### BRIEF DESCRIPTION OF THE DRAWINGS

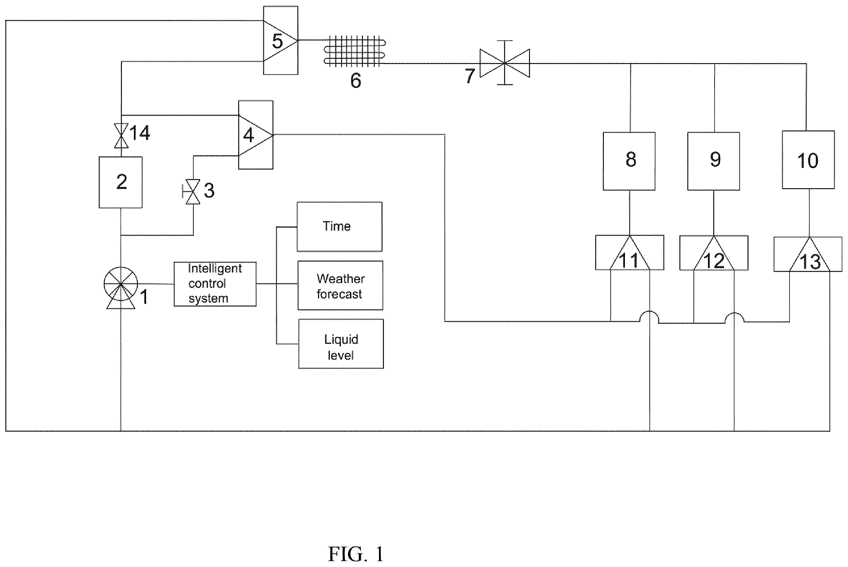

FIG. 1 is an abstract diagram of the specification (a coolant control flowchart); and

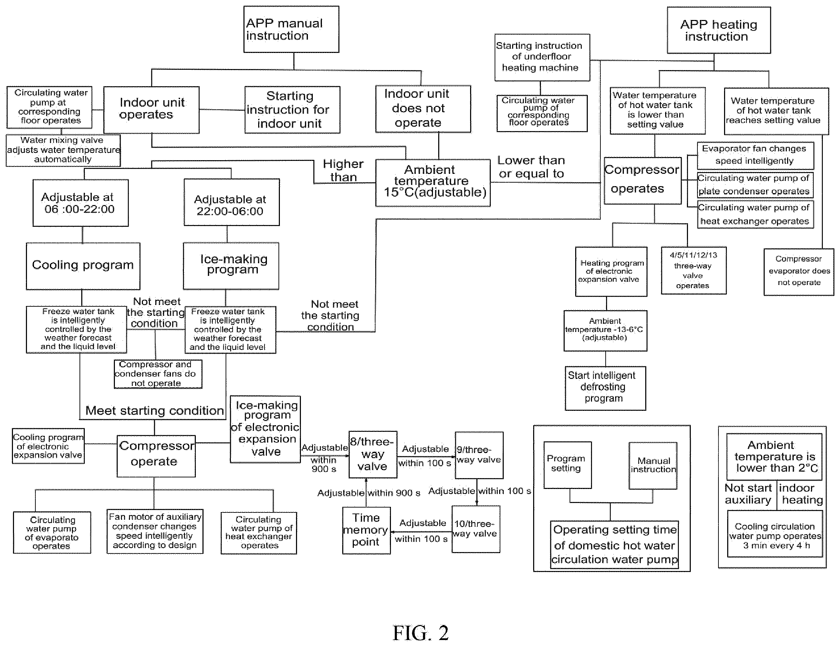

FIG. 2 is a block diagram of programs of an intelligent control system.

### DETAILED DESCRIPTION OF THE EMBODIMENTS

Cooling program: APP manual instruction: cooling or turning on any indoor unit.

Conditions: if a time period is 06:00-22:00 (adjustable by a user/the background), an ambient temperature is above 15°C (adjustable by a user/the background), and a water level of a freeze water tank meets a turn on condition designed by an intelligent system, the indoor unit is turned on: An electronic expansion valve cooling mode program starts; a compressor operates; a circulating water pump of a plate evaporator (pillow-shaped heat exchanger) operates; a circulating water pump of a double-pipe heat exchanger (heat exchange tank) operates; and a DC motor of an auxiliary condenser heat dissipation fan achieves intelligent variable speed cooling according to the design. If the conditions are not satisfied, the freeze water tank is used to store ice energy, and a compressor does not need to be started. If the compressor stops under a cooling condition, and a temperature of a hot water tank is lower than a set required temperature, a heating program will automatically start.

A circulation path of a coolant: 1/compressor-2/double-pipe heat exchanger (heat exchange tank)-14/choke tube-5/three-way valve-6/auxiliary condenser-7/electronic expansion valve (cooling program) -8/9/10plate evaporators (pillow-shaped heat exchangers)-11/12/13/three-way valves-compressor.

All the three-way valves are not powered on to work.

Ice storage program: APP manual instruction: cooling and ambient temperatures are above 15°C at the beginning of a set time period (adjustable by a user/the background). If the machine is powered on (either in a standby or on state), the machine will automatically start and stop according to requirements of the intelligent control system.

Conditions: if a time period is 22: 00-06:00 (adjustable by a user/the background), an ambient temperature is above 15°C (adjustable by a user/the background), and a water level of the freeze water tank satisfies a turn on condition designed by the intelligent system, the indoor unit is turned on: An electronic expansion valve ice making mode program starts; a compressor operates; a circulating water pump of a plate evaporator (pillow-shaped heat exchanger) operates; a circulating water pump of a double-pipe heat exchanger (heat exchange tank) operates; and a DC motor of an auxiliary condenser heat dissipation fan achieves intelligent variable speed cooling according to the design. Meanwhile, a hot air bypass deice making program starts according to a program setting. If the conditions are not satisfied, the freeze water tank is used to store ice energy, and a compressor does not need to be started for cooling. The machine stops. If the compressor stops under an ice making condition, and a temperature of a hot water tank is lower than a set required temperature, a heating program will automatically start.

A circulation path of a coolant: 1/compressor-2/double-pipe heat exchanger (heat exchange tank)-14/choke tube-5/three-way valve-6/auxiliary condenser-7/electronic expansion valve (ice making program) -8/9/10plate evaporators (pillow-shaped heat exchangers)-11/12/13/three-way valves-compressor.

All the three-way valves are not powered on to work.

Hot air bypass ice making program: after the system runs the ice making program and starts up normally for 15 minutes (adjustable in the background), the 11/three-way valve is powered on to work for 100 seconds (adjustable in the background). At this time, hot air at an outlet of the compressor after being depressurized by a 3/pressure regulating valve melt ices through the 4/three-way valve, the 11/three-way valve (hot) and the 8/plate condenser (pillow-shaped heat exchanger). Then, the 12/three-way valve is powered on to work for 100 seconds (adjustable in the background). The hot air at the outlet of the compressor after being depressurized by the 3/pressure regulating valve melts ices through the 4/three-way valve, the 12/three-way valve (hot) and the 9/plate condenser (pillow-shaped heat exchanger). Finally, the 13/three-way valve is powered on to work for 100 seconds (adjustable in the background). The hot air at the outlet of the compressor after being depressurized by the 3/pressure regulating valve melts ices through the 4/three-way valve, the 13/three-way valve (hot) and the 10/plate condenser (pillow-shaped heat exchanger). Ice melting of one cycle is completed. At the end of the ice melting for the third time, the system runs the program for another 15 minutes (adjustable in the background), to cyclically run this ice melting program.

An intelligent control system for an ice making capacity: an ice making time period (a time period at night, which is not allowed in the day) is preset before delivery of the equipment or is set by customers according to their experience. The ice making capacity is based on the highest temperature of weather forecast in the next 24 hours (with a reference value of 15°C) and is automatically adjusted by a digital liquid level controller. A non ice making time period naturally becomes a cold water making time period.

| | | | | | | | |
|---|---|---|---|---|---|---|---|
| Highest temperature of weather forecast /°C | 15-22 | 22-24 | 24-26 | 26-28 | 28-30 | 30-33 | 33+ |
| Liquid level when the ice making stops at night | 55 | 42 | 30 | 20 | 10 | 5 | 0 |
| Liquid level when the ice making starts again before the end of the ice making time | 63 | 50 | 38 | 28 | 18 | 13 | 8 |
| Liquid level for auxiliary cooling/startup in the day | 63 | 50 | 38 | 28 | 18 | 10 | 5 |
| Liquid level of stop after the auxiliary cooling in the day/after 5 o'clock p.m. (time point can be changed according to a need and experience) | 85 | 72 | 62 | 55 | 50 | 45 | 40 |

An intelligent control system for an ice making capacity in a different way of expression: the system converts a digital liquid level into an ice storage capacity through an algorithm in the background. That is: a liquid level of 0% indicates that all water above a safe liquid level in the freeze water tank has been converted into ice (100% ice), and a liquid level of 100% indicates that there is no or very little ice (0% ice) in the freeze water tank. In this way, the above table becomes the following interface (more intuitive and clear for users).

| | | | | | | | |
|---|---|---|---|---|---|---|---|
| Highest temperature/°C of weather forecast | 15-22 | 22-24 | 24-26 | 26-28 | 28-30 | 30-33 | 33+ |
| Ice storage capacity when the ice making stops at night | 45 | 58 | 70 | 80 | 90 | 95 | 100 |
| Ice storage capacity when the ice making starts again before the end of the ice making time | 37 | 50 | 62 | 72 | 82 | 87 | 92 |
| Ice storage capacity for auxiliary cooling/startup in the day | 37 | 50 | 62 | 72 | 82 | 90 | 95 |
| Ice storage capacity of stop after the auxiliary cooling in the day/after 5 o'clock p.m. (time point can be changed according to a need and experience) | 15 | 28 | 38 | 45 | 50 | 55 | 60 |

Parameters in this list can be adjusted and reset to the system default data with one click according to actual usage.

Air source heating program: the heating program can be manually activated via an APP at any ambient temperature. After the machine is authorized for the first time to start normally (a user chooses either the heating function or the cooling function), the heating program will automatically start according to the following steps and a required temperature set by the hot water tank in any situation except for manual shutdown: the electronic expansion valve heating mode program starts; the compressor operates; the circulating water pump of the plate evaporator (pillow-shaped heat exchanger) operates; the circulating water pump of the double-pipe heat exchanger (heat exchange tank) operates; and the DC motor of the heat dissipation fan of the auxiliary condenser (heating evaporator) achieves intelligent speed variation according to the design.
1. Manual heating is achieved via the APP or the underfloor heating controller starts, and the heating program starts.
2. If the ambient temperature is above 15°C (adjustable by a user) and a water level in the freeze water tank is lower than a programmed water level, the system will automatically switch to the heating program.
3. If the ambient temperature is less than or equal to 15°C (adjustable by a user) and even if a manual instruction is cooling, the system will automatically switch to the heating program

A circulation path of a coolant: 1/compressor-2/double-pipe heat exchanger (heat exchange tank)-14/choke tube-4/three-way valve (hot)-11/12/13/three-way valves (hot) -8/9/10/plate condensers (pillow-shaped heat exchangers)-7/electronic expansion valve-6/auxiliary condenser (heating evaporator)-5/three-way valve (hot)-compressor. The 4/5/11/12/13/ three-way valves are powered on to work.

Intelligent defrosting: in the heating program, the ambient temperature is between -13°C and 6°C (adjustable in the background according to an actual situation of the mounting site of the equipment). If a temperature of a rear-end pipe of the 6/auxiliary condenser (heating evaporator) is less than the ambient temperature by 10°C (adjustable in the background), all the three-way valves will be powered off to execute the cooling program for defrosting. When a temperature of the rear-end pipe of the 6/auxiliary condenser (heating evaporator) reaches 6-10°C (intelligently controlled according to defrosting time), the defrosting program will automatically exit, and the heating program is recovered. This action is periodic once the conditions are satisfied. During the defrosting, the double-pipe heat exchanger (heat exchange tank) still generates heat for heat exchange, which has little impact on the heating efficiency of the double-pipe heat exchanger (heat exchange tank). The pillow-shaped heat exchanger is now used as an evaporator, which uses low-temperature hot water from the freeze water tank to provide defrosting energy.

When the ambient temperature is not within this set range of between -13°C and 6°C (adjustable in the background according to the actual situation of the mounting site of the equipment), the defrosting program will not start.

Implementation of indoor systems: cooling and room-heating (underfloor heating) air conditioning systems:
When the cooling system is used, for normal operation, the main unit controls a water outlet pipe to supply water at a constant temperature of 12°C (adjustable), and uses an electric temperature-control automatic water mixing valve. A water source is freeze water of 0°C in the freeze water tank and return water of an air conditioning line. An air speed of the cooling indoor unit is adjusted by a built-in temperature control system of an indoor unit motherboard, to achieve a desired air speed and temperature effect (H/L/AUTO) for customers.

A motor of a cold water circulating water pump motor for cooling is controlled by a built-in Internet of things control card control motherboard of the indoor unit. That is, if any indoor unit is turned on, the motor of the cold water circulating water pump at the corresponding floor will continue to work until all indoor air conditioning units on this floor stop, and a maximum number of 6 indoor units can be arranged on the same floor. Installation personnel help users set up the motors of the cold water circulating water pumps at the floors corresponding to different indoor units in the APP.

During use of an underfloor heating machine, for normal operation, the water outlet pipe supplies water at a constant temperature of 45°C (adjustable), and the electric temperature control automatic water mixing valve is used. A water source is high-temperature water of the hot water tank and return water of the underfloor heating machine. A motor of an underfloor heating circulating water pump in the main unit is controlled by an indoor underfloor heating controller. Similarly, it is necessary to set up motors of underfloor heating circulating water pumps corresponding to the underfloor heating controllers of different rooms in the APP. If there is an indoor air conditioner (or a warming machine during auxiliary heating) or an underfloor heating machine (a heating system) on any floor being turned on, the circulating cold and hot water pumps at the corresponding floor will start, and then stop until all the circulating cold and hot water pumps at the corresponding floor stop. During the auxiliary heating, the circulating water pump at the corresponding floor cannot be started to provide indoor heating when the temperature of the original freeze water tank is below 28°C.

### Others:

All the circulating water pumps adopt a DC 24V safety voltage, which is safe and reliable.

After a customer adds an Internet of things account to the main unit, the APP can automatically discover all equipment supported by the APP under a local area network of the same router, and the customer does not need to add the equipment separately one by one. The customer can choose the group and type (cooling or underfloor heating) of equipment at which floor (by simply powering on one set of equipment and adding same). A maximum number of 6 indoor Internet of things temperature controllers can be arranged on the same floor under different working conditions.

An indoor cooling unit Internet of things network card, the indoor underfloor heating controller, and an outdoor main unit can be fully controlled via communication under the same router (including expansion), but communication control is not allowed in different routers.

Users can set up to 6 time periods of starting forced automatic circulation of domestic hot water according to their own lifestyles on the APP, or can manually start a forced circulating water pump. The working time of the forced circulating water pump can be adjusted in seconds (adjusted and set by a customer in the APP), and the circulation will automatically stop when the working time is due.

## Claims

1. An intelligent cloud-controlled energy-saving cooling/room-heating/heating system using weather forecast, time, temperature and liquid level control to achieve ice storage air conditioning and air source heat pump integration.

2. The system, which is **characterized in that** a cloud-controlled system automatically captures the highest temperature data of weather forecast of the next day of a mounting site of equipment; under the condition of time control, by cooperating with a high-precision digital liquid level (to calculate an ice storage capacity) set inside the equipment and with independently researched and developed supporting program systems, the use of electricity at night is used to cut peaks and supplement valleys; a sufficient ice storage capacity required for cooling in the next day is produced in a night environment; and the intelligent control system always operate at the most energy-saving way under three different working conditions: cooling, ice making and heating.

3. The system, comprising: a user APP (Application), which is a background control and management system for all equipment, to intelligently control software and hardware systems by equipment-side cloud control; by brand-new Intelligent of things control, remote background parameter optimization and adjustment can be implemented for the mounting site of the equipment; individual remote configurations for different parameters are provided for different mounting sites of the equipment, and the mode is achieved by OTA upgrade.

4. The system, comprising a pillow-shaped heat exchanger for producing cold water, a pillow-shaped heat exchanger for producing ice, and an air source heating hardware system.

5. The system, comprising a combined design of a choke tube and a secondary condenser, and a heat energy recovery system used under any working conditions.

6. The system, comprising an intelligent defrosting system of air source heating based on temperature control, wherein the defrosting during air source heating is controlled by an ambient temperature, and an intelligent defrosting program based on temperature control only starts when the ambient temperature is between -13°C and 6°C (adjustable in the background according to an actual environment of the mounting site of the equipment); the intelligent defrosting program does not start under other environmental temperature conditions, to reduce energy waste during periodic defrosting, maximize energy conservation, and improve an energy efficiency ratio.

7. The system, wherein all sets of equipment only need to be powered and be connected to a local area network WIFI, without mounting any physical signals and data connection cables, to reduce the mounting costs and minimizing the occurrence of failures of the equipment.

8. The system, wherein both a main unit and an indoor unit are designed with a wide voltage range of 80-240V; for different global power standards, only compressors with corresponding power requirements need to be configured, and other components and parts are not changed, to unify purchase and production in a more standardized design and reduce costs.

9. The system, wherein external cold and heat transmission media are all ordinary clean domestic water, which is completely free from environmental pollution; the system allows customers to set and manually control start time of domestic hot water circulation, ensuring that hot water is readily available, and saving water resources.
